# EUROPEAN PATENT APPLICATION

(11) **EP 2 453 272 A1**
(43) Date of publication of application: **16.05.2012**
(21) Application number: 11188835.0
(22) Date of filing: 11.11.2011
(51) Int. Cl.: G02B 6/38, G02B 6/42

(54) **Magnetically mating optical data connectors**

(30) Priority: 12.11.2010 US 413086 P
(71) Applicant: Research in Motion Limited, Waterloo, Ontario N2L 3W8 (CA)
(72) Inventor: Schwandt, Sheldon Terry, Waterloo, Ontario N2L 3W8 (CA); Barake, Omar, Waterloo, Ontario N2L 3W8 (CA); Winger, Lyall Kenneth, Waterloo, Ontario N2L 5R9 (CA); Dikun, Raymond Michael, Waterloo, Ontario N2L 5R9 (CA)
(74) Representative: Bryn-Jacobsen, Caelia

(57) **Abstract**

A magnetically mating optical circuit connector (104, 106). The magnetically mating optical circuit connector includes at least one optical terminal (130, 132) and a connector body (104, 106) configured to engage a corresponding connector (106, 104). The connector body attached to the at least one optical terminal. The connector body comprising at least one alignment feature (204) configured to align, when the connector body engages the corresponding connector, each of the at least one optical terminal with a respective corresponding optical terminal of the corresponding connector. The magnetically mating optical circuit connector further includes at least one magnetic attachment area, attached to the connector body. The at least one magnetic attachment area (122, 124) is configured to magnetically attach the connector body to the corresponding connector when the connector body is engaged into the corresponding connector.

## Description

### FIELD OF THE DISCLOSURE

The present disclosure generally relates to data communications and power connectors, and more particularly to magnetically mating connectors for optical data communications circuits that also include electrical power contacts.

### BACKGROUND

Electronic devices are incorporating increasing amounts of data processing capabilities in increasingly smaller form factors. For example, portable devices are able to produce high resolution video data streams from either stored data or data received through either a wired or wireless data communications circuit. Portable electronic devices are increasingly able to process or create large volumes of data that are able to be provided to external data systems, such as storage or display devices. Such increasing processing power often is accompanied by increasing electrical power consumption. Further, many portable electronic devices include a portable power pack that comprises a power storage element, such as a battery, that is recharged or replenished with power from time to time. Several connectors are generally required to provide high speed data communications and electrical power to an electronic device. Adding additional connectors to an electronic device introduces costs, product reliability concerns, and susceptibilities to inadvertent disconnections during use.

Presently available connectors for data communications circuits often utilize electronic data communications circuits that communicate data by varying voltage levels and associated current flows. As communications speeds increase for an electronic data communications circuit, electromagnetic interference becomes an increasing problem. Electromagnetic problems include both emitted interference generated by the high speed electronic data circuit and data errors suffered by the electronic data communications circuit that are induced by surrounding electromagnetic signals. These problems become more pronounced in high speed electronic data communications circuit that operate over long distances, such as a circuit between two electronic devices connected through a multiple conductor cable that has connectors at each end.

Therefore, present data communications circuit connectors limit the ease of use and reliability of data communications circuits used by electronic devices to communicate high speed data.

### BRIEF DESCRIPTION OF THE DRAWINGS

The accompanying figures where like reference numerals refer to identical or functionally similar elements throughout the separate views, and which together with the detailed description below are incorporated in and form part of the specification, serve to further illustrate various embodiments and to explain various principles and advantages all in accordance with the present disclosure, in which:

FIG. 1 illustrates a mated optical connector pair according to one example;

FIG. 2 is a mated connector detail in accordance with one example;

FIG. 3 illustrates an electronic device and cable pair, in accordance with one example;

FIG. 4 is a bottom view of the electronic device illustrated in FIG. 3;

FIG. 5 illustrates an open door receptacle connector of the electronic device illustrated in FIG. 3;

FIG. 6. illustrates a partially open door receptacle connector of the electronic device illustrated in FIG. 3;

FIG. 7 illustrates a power supply circuit connection, according to one example;

FIGs. 8 through 11 illustrate an optical terminal engaging connector pair in accordance with one example; and

FIG. 12 is a block diagram of an electronic device and associated components in which the systems and methods disclosed herein may be implemented.

### DETAILED DESCRIPTION

As required, detailed embodiments are disclosed herein; however, it is to be understood that the disclosed embodiments are merely examples and that the systems and methods described below can be embodied in various forms. Therefore, specific structural and functional details disclosed herein are not to be interpreted as limiting, but merely as a basis for the claims and as a representative basis for teaching one skilled in the art to variously employ the present subject matter in virtually any appropriately detailed structure and function. Further, the terms and phrases used herein are not intended to be limiting, but rather, to provide an understandable description of the concepts.

The terms "a" or "an", as used herein, are defined as one or more than one. The term plurality, as used herein, is defined as two or more than two. The term another, as used herein, is defined as at least a second or more. The terms "including" and "having," as used herein, are defined as comprising (i.e., open language). The term "coupled," as used herein, is defined as "connected," although not necessarily directly, and not necessarily mechanically.

Described below are systems and method for realizing an efficient optical circuit data communications connector that magnetically mates to a corresponding connector and that are also able to include electrical power conducting circuits. The systems and methods described below are directed to devices, accessories, and connectors that provide one or more hardwired optical circuit data links for an electronic device, such as a smart phone or other electronic data processing device such as laptop computers, portable media players, and even automobiles. The systems and methods described below are also directed to devices or accessories that include a receptacle or a port that mates with a corresponding connector to provide a magnetically mated optical path data connection. The connector is able to be used with an apparatus, such as a cable, that communicatively connects two electronic devices. The connector includes one or more optical data communication circuits by which data may pass optically between the electronic device and the connector.

The connector described below is able to include, but is not required to include, one or more magnets that are configured to mate to corresponding magnets on a mating connector, such as a receptacle that is part of an electronic device. These mating magnets operate to provide a force that holds two mated connectors together while allowing the mated connectors to "break way" if a pulling force is applied to a cable joined to one of the connectors.

Some connectors include terminals, which can also include the above described magnets, to convey electrical power to the electronic device from an external source or to convey electrical power out of the electronic device to supply power to other devices, such as electronic accessories connected to the device through these connectors. Some connectors are also able to include separate power rings that are located so as to surround one or more optical terminals as seen from an insertion side of the connector. The power rings enable the electronic device to receive power for operations, to charge a battery of the electronic device, or both. These power rings are able to operate alone or in conjunction with other electrical power circuits, such as may be present in another electrical interface. Additionally, a shroud is able to be incorporated into the connector to provide physical protection for the optical terminals and the electronic interfaces.

The optical terminals of some connectors are able to incorporate a substantially convex spherical or spheroid terminal shape. That is, some optical terminals may have a shape such as that of a dome or a cap of a sphere cap or a spheroid or ellipsoid or similar shape. A mating terminal of a mating connector may have a concave shape to ensure a tight physical connection and minimize or reduce refractive and reflective losses. The connector of one example that mounts on an electronic device so as to form a connecting receptacle of the electronic device may include a door that opens to receive a mating connector.

The optical data communications signal output of the electronic device is optically coupled to a light source such as a laser, which may be controlled with a driver. The optical input is optically coupled to a component that converts the optical signals to electrical signals. In some examples, the connector itself may include, but need not include, a comparable light source and converting component used to perform data communications through an optical circuit.

In one variation of the concept, one or more optical terminals are able to include components that protrude from the connector to assist in physically securing the connector to a mating connector. In one example, the mating connector is mounted on an electronic device. In one example of this variation, a portion of the mating connector yields to receive the protruding optical terminal component and moves to a position that resists, but does not prevent, removal of the connector.

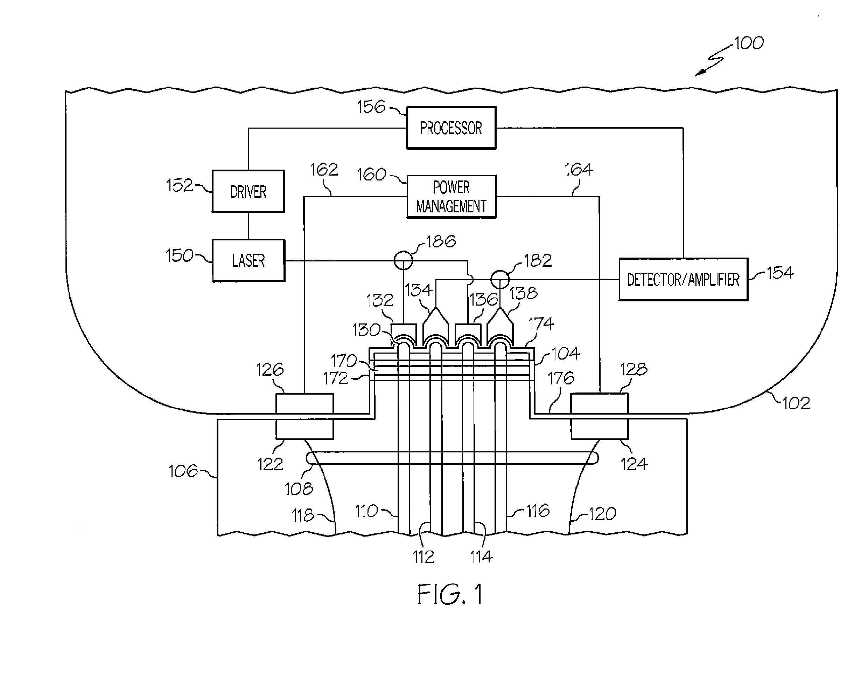

FIG. 1 illustrates a mated optical connector pair 100 according to one example. The illustrated mated connector pair 100 includes an electronic device 102 depicted as an outline of a housing. The electronic device 102 includes a receptacle connector 104 into which a plug connector 106 is mated. The mated optical connector pair 100 depicts four optical circuit pathways, a first transmit optical pathway 110, a first receive optical pathway 112, a second transmit optical pathway 114 and a second receive optical pathway 116. The optical pathways in this description are identified according to the function of that optical pathway relative to the electronic device 102. For example, the electronic device 102 transmits data through the first transmit optical pathway 110. A device on the opposite end of the optical pathway receives the data conveyed through the first transmit optical pathway 110.

The four optical pathways in this example are contained within a cable bundle 108. In one example, the cable bundle 108 encloses the four optical pathways and two electrical power conductors - a positive bundle power conductor 118 and a ground bundle power conductor 120 - in a single wrapping. The single wrapping of the cable bundle 108 extends for an arbitrary length to a remote end of the cable bundle that is opposite the plug connector 106. The remote end of the cable bundle is able to have its own remote connector (not shown). The remote connector is able to be similar to the plug connector 106 or consist of one or more other types of connectors suitable to convey optical signals and electrical power signals, as is described in detail below.

The four optical circuit pathways contained within the cable bundle 108 support two optical transmit paths and two optical receive paths by which the electronic device 102 respectively transmits and receives data. In one example, the optical circuit pathways are each a separate fiber-optic cable. Each fiber-optic cable of the optical circuit pathways has an optical terminal in the plug connector 106, as is described in detail below. For example, the first transmit optical pathway 110 has a first plug optical terminal 130 at the end of the plug connector 106.

The receptacle connector 104 includes device optical connectors for each optical circuit pathway present in the plug connector 106. As depicted in FIG. 1, the receptacle connector 104 has a proximal end 174 at an end closer to the interior of the electronic device 102, and a distal end 176 at an end closer to the exterior of the electronic device 102. A first device transmit optical terminal 132 and a second device transmit optical terminal 136 are positioned to mate with corresponding connector optical terminals present in the plug connector 106, as is described in further detail below. Similarly, a first device receive optical terminal 134 and a second device receive optical terminal 138 are positioned to mate with other corresponding connector optical terminals present in the plug connector 106.

The first device transmit optical terminal 132 and the second device transmit optical terminal 136 are connected in one example to a light source or emitter that generates one or more optical signals, such as a laser 150. The first device transmit optical terminal 132 and the second device transmit optical terminal 136 are connected in one example through a transmit switch 180 to allow transmission of different data streams through these two terminals. The laser 150 may be a vertical cavity surface-emitting laser (VCSEL). The laser 150 is an opto-electric component that generates an optical signal to optically communicate data. The laser 150 is in optical communications with the first transmit optical pathway 110 and the second transmit optical pathway 114, which convey the optical signal generated by the laser 150. A driver 152 within the electronic device 102 receives data from a processor 156 that is to be transmitted by the electronic device 102 over the optical circuit pathways. The data is typically in the form of an electrical signal, and may include analog signals, digital signals or a combination thereof. The driver 152 produces a properly conditioned drive signal to drive the laser 150 such that one or more optical signals are generated by the laser 150 that represent the data to be transmitted, that is, sent external to the electronic device 102. The optical signals generated by the laser 150 are typically digital signals and can be encoded in any fashion.

The first device receive optical terminal 134 and the second device receive optical terminal 138 are connected to an optical detector/amplifier 154. The first device receive optical terminal 134 and the second device receive optical terminal 138 are connected in one example through a receive switch 182 to allow reception of different data streams through these two terminals. The detector/amplifier 154 is an opto-electric component that receives optical signals conveyed by the first receive optical pathway 112 and the second receive optical pathway 116 and extracts, including the decoding of, data communicated through those optical signals. The detector/amplifier 154 is in optical communications with the first receive optical pathway 112 and the second receive optical pathway 116 and delivers the extracted data to the processor 156. The detector/amplifier 154 may comprise a transimpedance amplifier, for which an input optical signal generates a current signal, which may be amplified and expressed as an output voltage signal.

In one example, the transmit switch 180 and the receive switch 182 allow a common transmitting laser 150 and receiving optical detector/amplifier 154 to be used to communicate over two separate bi-directional optical circuits, thereby conserving the expense of duplicating these opto-electrical components. In a variation, independent lasers may generate optical signals for the respective transmit optical pathways 110 and 114, and independent detectors may receive optical signals conveyed by the receive optical pathways 112 and 116. In some examples, one or more of the laser 150, the optical detector/amplifier 154, the transmitter optical switch 180 and the receiver optical switch 182 are contained within a pre-formed assembly containing other components of the receptacle connector 104.

The illustrated mated optical connector pair 100 includes magnet attachment areas that are located on both the plug connector 106 and the receptacle connector 104 so as to hold those two connectors together when forming the mated connector pair 100. These magnets provide a force to hold the two mated connectors together, but also operate to allow the mated connectors to pull apart, or "break away," if a pulling force is applied to one of the connectors, such as by pulling a cable fastened to the plug connector 106.

The plug connector 106 includes a first plug magnet 122 and a second plug magnet 124 that are illustrated in this example as being located on either side of the optical circuit pathways. The first plug magnet 122 and second plug magnet 124 are magnetic attachment areas for the plug connector 106. The receptacle connector 104 has a first receptacle magnet 126 and a second receptacle magnet 128. The first receptacle magnet 126 and second receptacle magnet 128 are magnetic attachment areas for the receptacle connector 104. In contrast to the optical circuit terminals of the receptacle connector 104, the magnets 126 and 128 of the receptacle connector are depicted as deployed proximate to the distal end 176 of the receptacle connector. In other examples, magnetic attachment areas are able to have any suitable shape and configuration.

The first plug magnet 122 and the first receptacle magnet 126 are located at corresponding locations in their respective connectors such that they engage each other when the plug connector 106 is inserted into the receptacle connector 104. The second plug magnet 124 and the second receptacle magnet 128 are located at similar locations on their respective connectors. The second plug magnet 124 and the second receptacle magnet 128 are located on their respective connectors at locations that are across from the optical terminals of those connectors. In order to facilitate magnetically fastening the plug connector 106 to the receptacle connector 104, the first plug magnet 122 and the first receptacle magnet 126 are positioned to face each other in the mated connector pair 100 with opposite magnetic polarity. The second plug magnet 124 and the second receptacle magnet 128 are similarly mounted to face each other with opposite magnetic polarity. In one example, the first receptacle magnet 126 and the second receptacle magnet 128 have opposite polarities facing the plug connector 106 so that the plug magnets will repel the receptacle magnets if the orientation of the plug connector 106 is inadvertently reversed.

The above described arrangement of the plug magnets and the receptacle magnets allow the receptacle connector 104 and the plug connector 106 to have a symmetrical construction that physically allows the plug connector 106 to be inserted into the receptacle connector 104 with an incorrect orientation. In an example, a symmetrical configuration would allow the insertion of the plug connector 106 into the receptacle connector 104 such that the first plug magnet 122 is opposite the second receptacle magnet 128. Although this incorrect, reversed, insertion is physically possible due to the symmetrical configuration of the connectors, the magnetic polarity of the receptacle magnets and their opposing plug magnets will repel those magnets and prohibit inserting the plug connector 106 into the receptacle connector 104 with this incorrect orientation.

The magnets of one example are electrically conductive and are connected to electrical power conductors to provide electrical power to the electronic device 102 or allow the electronic device 102 to provide power to external electronic accessories or other devices connected to a plug connector 106 mated to the receptacle connector 104. The first plug magnet 122 is connected to a positive bundle power conductor 118 and the second plug magnet 124 is connected to a ground bundle power conductor 120. The positive bundle power conductor 118 and the ground bundle power conductor 120 are connected to a suitable Direct Current (DC) power source to provide power to the electronic device. The first receptacle magnet 126 is connected to a positive device power conductor 162 and the second receptacle magnet 128 is connected to a ground device power conductor 164. The positive device power conductor 162 and the ground device power conductor 164 are in turn connected to a power management module 160 of the electronic device 102. The power management module 160 provides electrical power to the electronic device 102 as well as charges batteries (not shown) or other chargeable or rechargeable power elements of the electronic device 102.

In various examples, the opto-electronic components of the electronic device 102, such as the laser 150, the detector/amplifier 154, or both, are only supplied with power that is delivered through the receptacle connector 104. These components in such examples are not provided with power supplied by a power source, such as a battery, that is internal to the electronic device 102. In such examples, the opto-electronic components of the electronic device 102 are only powered when an optical data communications circuit is connected to the receptacle connector 104, and thereby conserves the energy stored or provided by the internal energy of the electronic device 102.

When the plug connector 106 is inserted into the receptacle connector 104, the first plug magnet 122 is in physical contact with the first receptacle magnet 126 and the second plug magnet 124 is in physical contact with the second receptacle magnet 128. These magnets are electrically conductive and therefore electrically conductive paths are formed through the contacting magnets. In the illustrated example, the first plug magnet 122 and the first receptacle magnet 126 form a conductive path between the positive bundle power conductor 118 and the positive device power conductor 162. Similarly, the second plug magnet 124 and the second receptacle magnet 128 form another conductive path between the ground bundle power conductor 120 and the ground device power conductor 164. In this way, the respective magnets may perform one or more functions: preventing insertion of a plug connector 106 into a receptacle connector 104 with an incorrect orientation; urging insertion of a plug connector 106 into a receptacle connector 104 with a correct orientation; maintaining insertion of a correctly oriented plug connector 106 in a receptacle connector 104 while also enabling ready release of the plug connector 106 from the receptacle connector 104; and being part of a conductive path. As depicted in FIGs. 1 and 7-10 discussed below, the optical terminals of the receptacle connector 104 or plug connector 106 may be substantially in a row or in a line, with the optical circuit terminals interposed between the magnets, giving the connectors 104 and 106 a relatively thin profile. Further, the optical terminals of the receptacle connector 104 are depicted as deployed proximate to the proximal end 174 of the receptacle connector 104.

In addition to, or in place of, the electrical power circuit provided through the above described magnets, some connectors include one or more plug power rings. A first plug power ring 170 is located on a portion of the plug connector 106 that protrudes into the receptacle connector 104 when the two are mated. The first plug power ring 170 of one example surrounds the optical terminals of the plug connector 106. When the plug connector 106 is mated to the receptacle connector 104, the first plug power ring 170 is in contact with a corresponding receptacle power ring 172 that is larger than the first plug power ring 170 and is located within the cavity of receptacle connector 104. The receptacle power ring 172 mates with the first plug power ring 170 to form an electrical power circuit that conveys electrical power through the mated optical connector pair 100. Connectors are able to also include a second plug power ring (not shown) to form a second electrical power circuit. The second plug power ring is able to be located at a different position on the portion of the plug connector 106 that protrudes into the receptacle connector 104 or is able to be located concentrically within the plug connector 106 to mate with a corresponding receptacle power ring suitably placed within the receptacle connector 104. These two electrical power circuits form a positive and negative current flow through the mated optical connector pair 100.

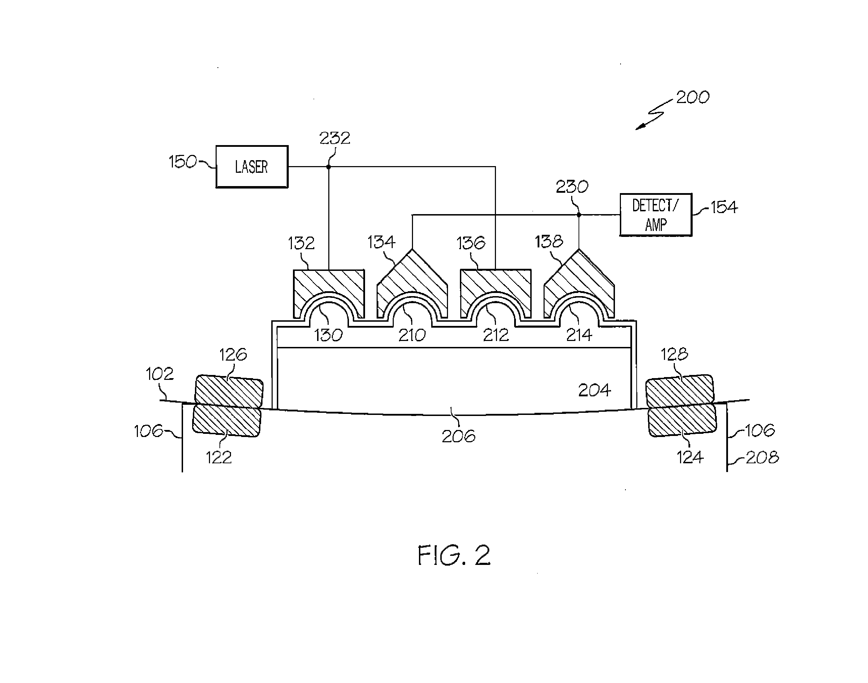

FIG. 2 is a mated connector detail 200 in accordance with one example. The mated connector detail 200 illustrates the receptacle connector 104 and the plug connector 106 that were described above. The mated connector detail depicts a plug connector protrusion 204 that extends from the plug connector 106 and thereby forms an extension of the plug connector 106. The plug connector protrusion 204 inserts into the receptacle connector 104 to create the mated connector pair 100. In one example, the plug connector protrusion 204 is an alignment feature of the plug connector 106 that aligns the each of the optical terminals of the plug connector 106 with a respective corresponding optical terminal of the corresponding receptacle connector 104. In one example, the plug connector protrusion 204 is movably attached to the plug connector 106 and is urged into an extended position by a yieldable member (not shown) within the plug connector 106. As the plug connector 106 is inserted into the receptacle connector 104, the plug connector protrusion 204 is urged into plug connector 106 and is pressed into the receptacle connector 104.

The receptacle connector 104 of one example includes a movable door 206 that is normally closed to prevent contaminants from entering the cavity of the receptacle connector 104. The door 206 in this example is hingedly or rotatably mounted at the edge of the receptacle connector 104 near the surface of the housing of the electronic device 102. The door 206 is configured to open upon the application of force, such as a force accompanying the insertion of the plug connector 106, and to substantially close in the absence of the force. The door 206 is urged closed by a biasing element such as a spring, i.e., so as to block the opening of the cavity of the receptacle connector 104, in the absence of the plug connector 106. Insertion of the plug connector 106 causes the door 206 to move by being urged into an open condition or position to allow the receptacle connector 104 to receive the plug connector 106.

Once the plug connector protrusion 204 is inserted into the receptacle connector 104, plug connector 106 and the receptacle connector 104 are held together by the first plug magnet's 122 magnetic attachment to the first receptacle magnet 126 and the second plug magnet's 124 magnetic attachment to the second receptacle magnet 128. In some examples, these magnetic attachments are a primary retaining force holding the plug connector 106 to the receptacle connector 104. In other examples, other retaining forces are used to hold the plug connector 106 to the receptacle connector 104. For example, one or more yieldable clips, hasps, snaps or other releasable retaining structures (not shown) are able to be incorporated into the receptacle connector 104 to engage voids or other features formed on the surface of the plug connector 106 when the plug connector 106 is inserted into the receptacle connector 104.

The mated connector detail 200 depicts the optical terminals contained within the plug connector 106 and the receptacle connector 104. The plug connector 106 includes a first plug optical terminal 130, a second plug optical terminal 210, a third plug optical terminal 212 and a fourth plug optical terminal 214. Each of these plug optical terminal is at an end of a respective optical circuit pathway, as is described above. As illustrated for the mated connector detail 200, each of the plug optical terminals has a convex spherical or spheroid shape.

The receptacle connector 104 has a series of device optical terminals that engage corresponding plug optical terminals once the plug connector 106 is inserted into the receptacle connector 104. The device optical terminals are shown to have concave spherical or spheroid shapes that are conjugate surfaces of the convex spheroid shapes of the plug optical terminals. These device optical terminals engage the convex spheroid shapes of the plug optical terminals when the plug connector 106 is inserted into the receptacle connector 104. In some variations, one or more receptacle optical circuit terminals may be convex, and corresponding plug optical circuit terminals may be concave. As noted previously, the shapes of the corresponding components may promote a more ready and secure mating, and may further provide optical spreading and/or converging of light. Arrangement of concave and convex optical circuit terminals may also be used to create an asymmetrical construction that physically will not allow the plug connector 106 to be inserted into the receptacle connector 104 with an incorrect orientation. In addition, other structural arrangements and elements may create asymmetry, such as a non-uniform spacing of the optical circuit terminals or the inclusion of one or more slots, protrusions, bumps, ledges and the like, which will not allow the plug connector 106 to be inserted into the receptacle connector 104 with an incorrect orientation. Such structures may, in addition to preventing the plug connector 106 to be inserted into the receptacle connector 104 with an incorrect orientation, serve as releasable retaining structures that can hold the plug connector 106 to the receptacle connector 104, as discussed above.

As described above, the plug connector protrusion 204 is urged into the receptacle connector 104 under force of a yieldable member within the plug connector 106 when the plug connector 106 is inserted into the receptacle connector 104. The force of the yieldable member may cause the conjugate shapes of the plug optical terminals and the device optical terminals to mate without a gap.

Once the plug connector 106 is inserted into the receptacle connector 104, an optical circuit connection is completed between the optical circuit pathways of the cable bundle 108 and the laser 150 and detector amplifier 154. In the illustrated configuration, the laser 150 delivers a generated optical signal encoded with transmitted data to a transmitter optical switch 232. The transmitter optical switch 232 switches the generated optical signal to one of the first device transmit optical terminal 132 or the second device transmit optical terminal 136. The detector/amplifier 154 similarly receives optical signals encoded with received data from a receiver optical switch 232. The receiver optical switch 232 receives optical signals from one of the first device receive optical terminal 134 or the second device receive optical terminal 138. These optical switches allow a common transmitting laser 150 and receiving optical detector/amplifier 154 to be used to communicate over two separate bi-directional optical circuits. In a variation, independent lasers may generate optical signals for the respective transmit optical pathways 110 and 114, and independent detectors may receive optical signals conveyed by the receive optical pathways 112 and 116.

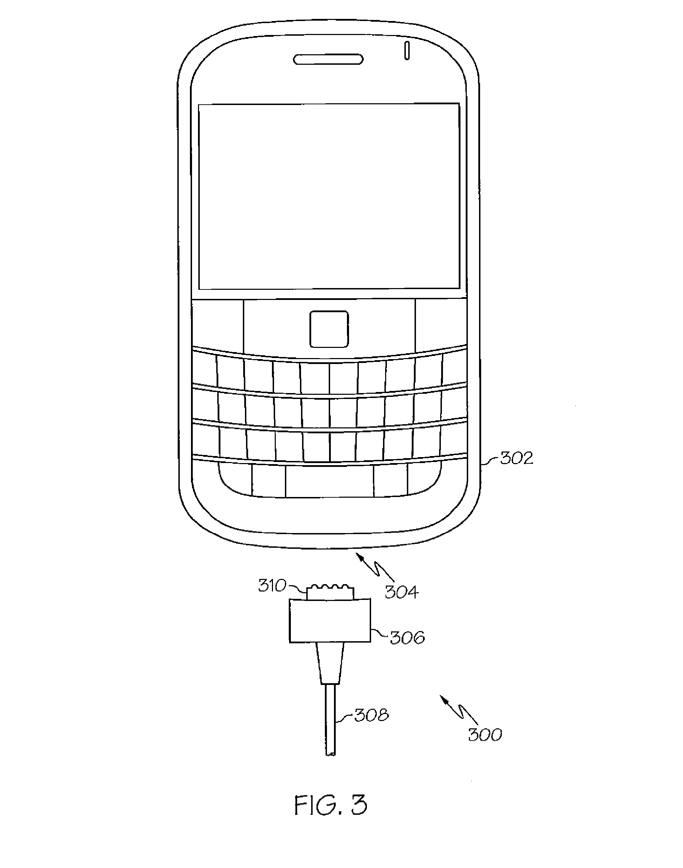

FIG. 3 illustrates an electronic device and cable pair 300, in accordance with one example. An electronic device 302 in this example is a portable electronic device that includes a data processor and internal power management components. The electronic device 302 may include a display screen that may be able to produce graphical output, such as high resolution video. A plug connector 306 is shown at one end of a cable bundle 308. The plug connector 306 is further shown with a plug connector protrusion 310 that is inserted into a receptacle connector 304 at the bottom of the electronic device 302. The plug connector 306 and the receptacle connector 304 are similar to the plug connector 106 and the receptacle connector 104 described in detail above. The electronic device 302 further includes similar optical data communications components as were also described in detail above with regards to FIGs. 1 and 2.

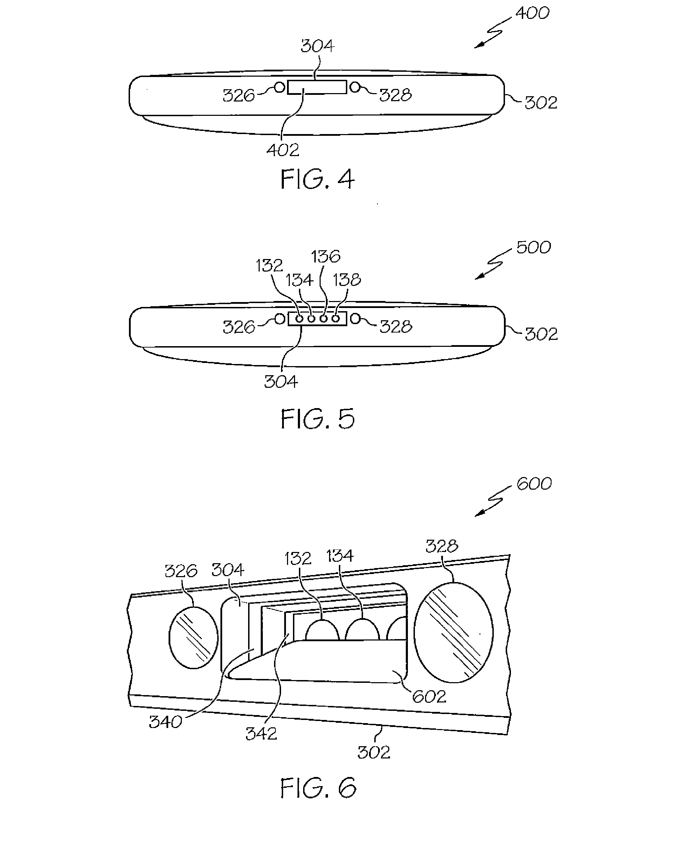

FIG. 4 is a bottom view 400 of the electronic device 302 illustrated in FIG. 3. The bottom view 400 depicts the receptacle connector 304 of the electronic device 302 with a closed door 402. The closed door 402 is similar to the door 206 described above for the receptacle connector 104. As described above, in the absence of a plug connector, the closed door 402 is held in a closed position by a yieldable member (not shown).

The bottom view 400 further illustrates a first receptacle magnet 326 and a second receptacle magnet 328. The first receptacle magnet 326 and the second receptacle magnet 328 are similar to the first receptacle magnet 126 and the second receptacle magnet 128 described above with regards to FIGs. 1 and 2. The first receptacle magnet 326 and the second receptacle magnet 328 operate to form a magnetic attachment with magnets on the plug connector 306 in a manner similar to that described above regarding the magnetic attachment of the first receptacle magnet 126 and the second receptacle magnet 128 to the first plug magnet 122 and the second plug magnet 124.

FIG. 5 illustrates an open door receptacle connector 500 of the electronic device 302 illustrated in FIG. 3. The open door receptacle connector 500 depicts the receptacle connector once the closed door 402 has been opened. In operation, the closed door 402 is generally opened by insertion of the plug connector 306 into the receptacle connector 304. The open door receptacle connector 500 is presented for illustration purposes without the inserted plug connector 306 to show the device optical terminals within the receptacle connector 304 once the closed door 402 is opened.

The open door receptacle connector 500 shows the first device transmit optical terminal 132, the second device transmit optical terminal 136, the first device receive optical terminal 134, and the second device receive optical terminal 138. As depicted for the receptacle connector 104, the device optical terminals are located internally to the electronic device 302 within a cavity of the receptacle connector 304. The first receptacle magnet 326 and the second receptacle magnet 328 are also shown adjacent to the cavity of the receptacle connector 304 in the open door receptacle connector 500. As illustrated in FIGs. 4 and 5, the receptacle connector 104 and the plug connector 106 that may mate with the receptacle connector 104 may have a relatively thin profile.

FIG. 6. illustrates a partially open door receptacle connector 600 of the electronic device 302 illustrated in FIG. 3. The partially open door receptacle connector 600 is a diagonal view similar to the closed door receptacle connector 400 but with a partially open door 602. The partially open door 602 illustrates the operation of the rotatably mounted door 206 when the rotatably or hingedly mounted door 206 is midway between open and closed. The first receptacle magnet 326 and the second receptacle magnet 328 are also shown adjacent to the cavity of the receptacle connector 304 in the partially open door receptacle connector 600. The door 602 need not open exactly as shown.

The partially open door receptacle connector 600 further illustrates a first receptacle power ring 340 and a second receptacle power ring 342 mounted within the receptacle connector 304 of the electronic device 302. The first receptacle power ring 340 engages a corresponding plug power ring mounted on a plug connector, such as is discussed above, that mates to the receptacle connector of the electronic deice 302.

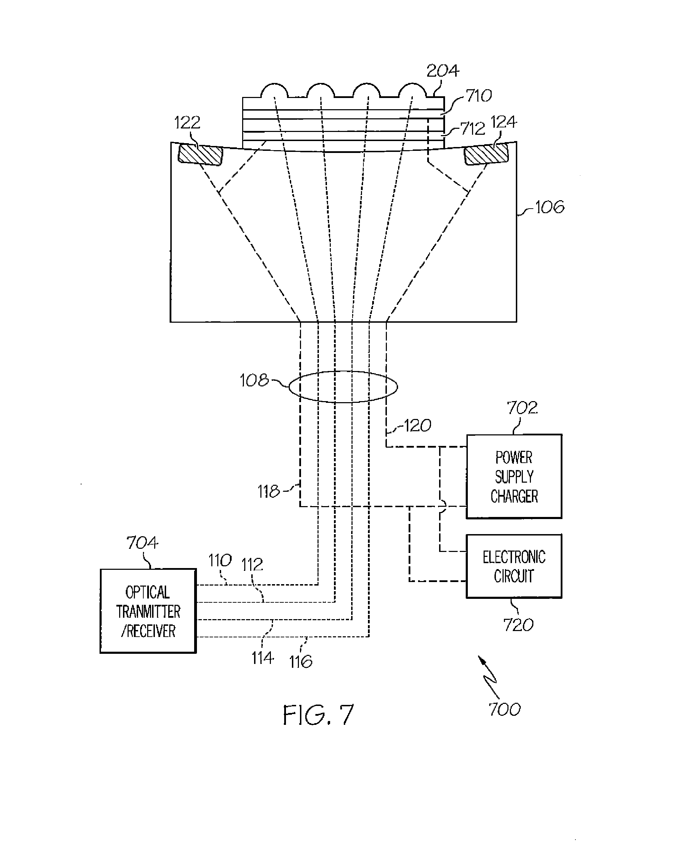

FIG. 7 illustrates a data and power supply circuit connection 700, according to one example. The data and power supply circuit connection 700 depicts a plug connector 106 with a cable bundle 108 as described above with regards to FIGs. 1 and 2. The cable bundle illustrates the four optical pathways, the first transmit optical pathway 110, a first receive optical pathway 112, a second transmit optical pathway 114 and a second receive optical pathway 116, being routed to an optical transmitter/receiver 704. The optical transmitter/receiver 704 is located in, for example, an external computer with which the electronic device 102 communicates data. It is also possible that the optical transmitter/receiver 704 may be located elsewhere, such as at the opposite end of the cable bundle 108.

The data and power supply circuit connection 700 further depicts the first plug magnet 122 is connected to a positive bundle power conductor 118 and the second plug magnet 124 is connected to a ground bundle power conductor 120. The positive bundle power conductor 118 and the ground bundle power conductor 120 are connected to a power supply/charger 702 to provide electrical power to the electronic device 102 to either operate the electronic device 102 or charge batteries or other power storage elements within the electronic device 102. The power supply/charger 702 may include one or more electric or electronic elements that may facilitate power provision or charging, such as a transformer, power regulator, rectifier, and the like.

The data and power supply circuit connection 700 also shows a first plug power ring 710 that is connected to a positive bundle power conductor 118 and the second plug power ring 712 that is connected to a ground bundle power conductor 120. As described above, the positive bundle power conductor 118 and the ground bundle power conductor 120 are connected to a power supply/charger 702 to provide electrical power to the electronic device 102 to either operate the electronic device 102 or charge batteries within the electronic device 102. In addition to providing electrical power to the electronic device 102, the positive bundle power conductor 118 and the ground bundle power conductor 120 are able to deliver power from the electronic device 102 to an electronic circuit 720 that is external to the electronic device 102, such as to an electronic accessory that is connected to the electronic device through the cable bundle 108.

The first plug power ring 710 and the second plug power ring 712 mate with corresponding receptacle power rings, as discussed above with respect to FIG. 6, to form an alternative electrical power circuit between a device and the plug connector 106. The alternative electrical power circuit form by the first plug power ring 710 and the second plug power ring 712, in conjunction with corresponding receptacle power rings on a mating receptacle, are able to operate in conjunction with the power circuit formed by the first plug magnet 122 and the second plug magnet 124, or the alternative electrical power circuit is able to operate alone as a power circuit through the plug connector 106.

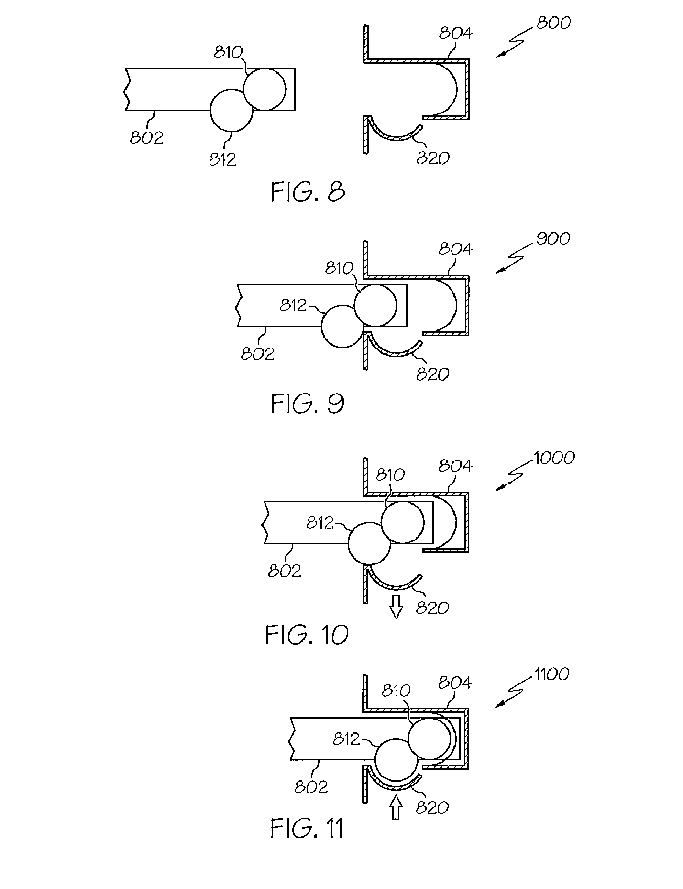

FIGs. 8 through 11 illustrate an optical terminal engaging connector pair in accordance with one example. A first connector body 802 with a first optical terminal 810 and a second optical terminal 812. The second optical terminal 812 is mounted on the bottom side of the first connector body 802. The first connector body 802 engages a second connector body 804 that includes an optical terminal engagement clip 820. The optical terminal engagement clip 820 has a conjugate shape to the second optical terminal 812, and is yieldably mounted on the bottom side of the second connector body 804.

FIG. 8 shows a separated optical terminal engaging connector pair 800, where the first connector body 802 is removed from the second connector body 804. FIG. 9 shows a first partially engaged optical terminal engaging connector pair 900, where the first connector body is partially inserted into the second connector body 804 and the second optical terminal 812 touches the optical terminal engagement clip 820.

FIG. 10 shows a second partially engaged optical terminal engaging connector pair 1000, where the first connector body 802 is continued to be inserted into the second connector body 804. In this position, the second optical terminal 812 urges the optical terminal engagement clip 820 down.

FIG. 11 shows a completely engaged optical terminal engaging connector pair 1100, where the first connector body 802 is completely inserted into the second connector body 804. In this position, the optical terminal engagement clip 820 returns to it original position and engages the second optical terminal 812 to secure the first connector body 802 in the completely engaged position within the second connector body 804.

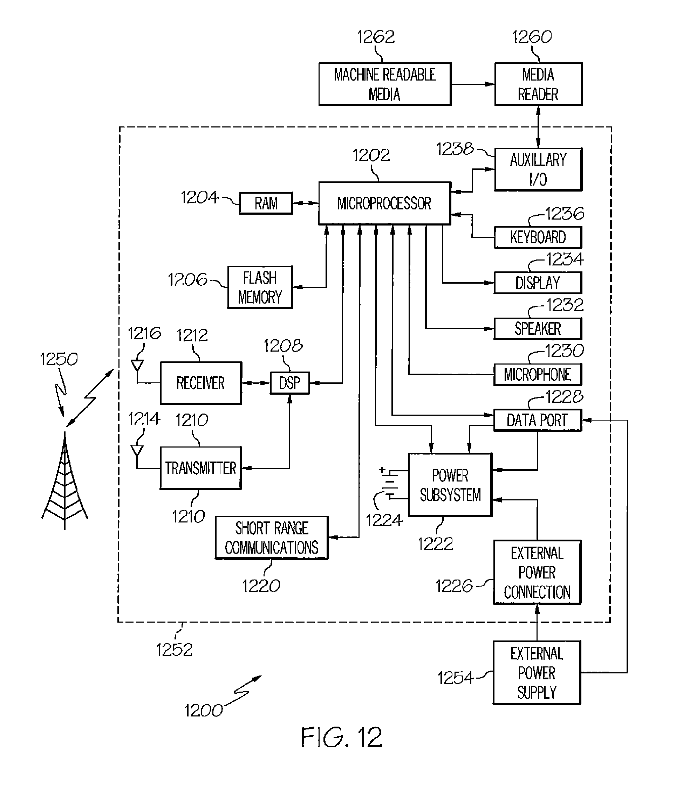

FIG. 12 is a block diagram of an electronic device and associated components 1200 in which the systems and methods disclosed herein may be implemented. In this example, an electronic device 1252 is a wireless two-way communication device with voice and data communication capabilities. Such electronic devices communicate with a wireless voice or data network 1250 using a suitable wireless communications protocol. Wireless voice communications are performed using either an analog or digital wireless communication channel. Data communications allow the electronic device 1252 to communicate with other computer systems via the Internet. Examples of electronic devices that are able to incorporate the above described systems and methods include, for example, a data messaging device, a two-way pager, a cellular telephone with data messaging capabilities, a wireless Internet appliance or a data communication device that may or may not include telephony capabilities.

The illustrated electronic device 1252 is an example electronic device that includes two-way wireless communications functions. Such electronic devices incorporate communication subsystem elements such as a wireless transmitter 1210, a wireless receiver 1212, and associated components such as one or more antenna elements 1214 and 1216. A digital signal processor (DSP) 1208 performs processing to extract data from received wireless signals and to generate signals to be transmitted. The particular design of the communication subsystem is dependent upon the communication network and associated wireless communications protocols with which the device is intended to operate.

The electronic device 1252 includes a microprocessor 1202, which may be, but not be, the same processor as processor 156 discussed above, that controls the overall operation of the electronic device 1252. The microprocessor 1202 interacts with the above described communications subsystem elements and also interacts with other device subsystems such as flash memory 1206, random access memory (RAM) 1204, auxiliary input/output (I/O) device 1238, data port 1228, display 1234, keyboard 1236, speaker 1232, microphone 1230, a short-range communications subsystem 1220, a power subsystem 1222, and any other device subsystems.

One or more power storage or supply elements, such as a battery 1224, are connected to a power subsystem 1222 to provide power to the circuits of the electronic device 1252. The power subsystem 1222 includes power distribution circuitry for providing power to the electronic device 1252 and also contains battery charging circuitry to manage recharging the battery 1224 (or circuitry to replenish power to another power storage element). The power subsystem 1222 receives electrical power from external power supply 1254. The power subsystem 1222 is able to be connected to the external power supply 1254 through a dedicated external power connector (not shown) or through power connections within the data port 1228, such as are formed by the magnets of the plug connector 106 and receptacle connector 104 discussed above. The power subsystem 1222 includes a battery monitoring circuit that is operable to provide a status of one or more battery status indicators, such as remaining capacity, temperature, voltage, electrical current consumption, and the like, to various components of the electronic device 1252.

The data port 1228 of one example is a receptacle connector 104, as described above. The data port 1228 is able to support data communications between the electronic device 1252 and other devices through various modes of data communications, such as high speed data transfers over an optical communications circuits. Data port 1228 is able to support communications with, for example, an external computer or other device. In some examples, the data port 1228 is able to include electrical power connections to provide externally provided electrical power to the electronic device 1252, deliver electrical power from the electronic device 1252 to other externally connected devices, or both. Data port 1228 of, for example, an electronic accessory is able to provide power to an electronic circuit, such as microprocessor 1202, and support exchanging data between the microprocessor 1202 and a remote electronic device that is connected through the data port 1228.

Data communication through data port 1228 enables a user to set preferences through the external device or through a software application and extends the capabilities of the device by enabling information or software exchange through direct connections between the electronic device 1252 and external data sources rather then via a wireless data communication network. In addition to data communication, the data port 1228 provides power to the power subsystem 1222 to charge the battery 1224 or to supply power to the electronic circuits, such as microprocessor 1202, of the electronic device 1252.

Operating system software used by the microprocessor 1202 is stored in flash memory 1206. Further examples are able to use a battery backed-up RAM or other non-volatile storage data elements to store operating systems, other executable programs, or both. The operating system software, device application software, or parts thereof, are able to be temporarily loaded into volatile data storage such as RAM 1204. Data received via wireless communication signals or through wired communications are also able to be stored to RAM 1204.

The microprocessor 1202, in addition to its operating system functions, is able to execute software applications on the electronic device 1252. A set of applications that control basic device operations, including at least data and voice communication applications, is able to be installed on the electronic device 1252 during manufacture. Examples of applications that are able to be loaded onto the device may be a personal information manager (PIM) application having the ability to organize and manage data items relating to the device user, such as, but not limited to, e-mail, calendar events, voice mails, appointments, and task items.

Further applications may also be loaded onto the electronic device 1252 through, for example, the wireless network 1250, an auxiliary I/O device 1238, Data port 1228, short-range communications subsystem 1220, or any combination of these interfaces. Such applications are then able to be installed by a user in the RAM 1204 or a non-volatile store for execution by the microprocessor 1202.

In a data communication mode, a received signal such as a text message or web page download is processed by the communication subsystem, including wireless receiver 1212 and wireless transmitter 1210, and communicated data is provided the microprocessor 1202, which is able to further process the received data for output to the display 1234, or alternatively, to an auxiliary I/O device 1238 or the Data port 1228. A user of the electronic device 1252 may also compose data items, such as e-mail messages, using the keyboard 1236, which is able to include a complete alphanumeric keyboard or a telephone-type keypad, in conjunction with the display 1234 and possibly an auxiliary I/O device 1238. Such composed items are then able to be transmitted over a communication network through the communication subsystem.

For voice communications, overall operation of the electronic device 1252 is substantially similar, except that received signals are generally provided to a speaker 1232 and signals for transmission are generally produced by a microphone 1230. Alternative voice or audio I/O subsystems, such as a voice message recording subsystem, may also be implemented on the electronic device 1252. Although voice or audio signal output is generally accomplished primarily through the speaker 1232, the display 1234 may also be used to provide an indication of the identity of a calling party, the duration of a voice call, or other voice call related information, for example.

Depending on conditions or statuses of the electronic device 1252, one or more particular functions associated with a subsystem circuit may be disabled, or an entire subsystem circuit may be disabled. For example, if the battery temperature is low, then voice functions may be disabled, but data communications, such as e-mail, may still be enabled over the communication subsystem.

A short-range communications subsystem 1220 provides for data communication between the electronic device 1252 and different systems or devices, which need not necessarily be similar devices. For example, the short-range communications subsystem 1220 includes an infrared device and associated circuits and components or a Radio Frequency based communication module such as one supporting Bluetooth^{®} communications, to provide for communication with similarly-enabled systems and devices, including the data file transfer communications described above.

A media reader 1260 is able to be connected to an auxiliary I/O device 1238 to allow, for example, loading computer readable program code of a computer program product into the electronic device 1252 for storage into flash memory 1206. One example of a media reader 1260 is an optical drive such as a CD/DVD drive, which may be used to store data to and read data from a computer readable medium or storage product such as computer readable storage media 1262. Examples of suitable computer readable storage media include optical storage media such as a CD or DVD, magnetic media, or any other suitable data storage device. Media reader 1260 is alternatively able to be connected to the electronic device through the Data port 1228 or computer readable program code is alternatively able to be provided to the electronic device 1252 through the wireless network 1250.

Information Processing System

The present subject matter can be realized in hardware, software, or a combination of hardware and software. A system can be realized in a centralized fashion in one computer system, or in a distributed fashion where different elements are spread across several interconnected computer systems. Any kind of computer system - or other apparatus adapted for carrying out the methods described herein - is suitable. A typical combination of hardware and software could be a general purpose computer system with a computer program that, when being loaded and executed, controls the computer system such that it carries out the methods described herein.

The present subject matter can also be embedded in a computer program product, which comprises all the features enabling the implementation of the methods described herein, and which - when loaded in a computer system - is able to carry out these methods. Computer program in the present context means any expression, in any language, code or notation, of a set of instructions intended to cause a system having an information processing capability to perform a particular function either directly or after either or both of the following a) conversion to another language, code or, notation; and b) reproduction in a different material form.

Each computer system may include, inter alia, one or more computers and at least a computer readable medium allowing a computer to read data, instructions, messages or message packets, and other computer readable information from the computer readable medium. The computer readable medium may include computer readable storage medium embodying non-volatile memory, such as read-only memory (ROM), flash memory, disk drive memory, CD-ROM, and other permanent storage. Additionally, a computer medium may include volatile storage such as RAM, buffers, cache memory, and network circuits. Furthermore, the computer readable medium may comprise computer readable information in a transitory state medium such as a network link and/or a network interface, including a wired network or a wireless network, that allow a computer to read such computer readable information.

Non-Limiting Examples

Although specific embodiments of the subject matter have been disclosed, those having ordinary skill in the art will understand that changes can be made to the specific embodiments without departing from the spirit and scope of the disclosed subject matter. The scope of the disclosure is not to be restricted, therefore, to the specific embodiments, and it is intended that the appended claims cover any and all such applications, modifications, and embodiments within the scope of the present disclosure.

## Claims

1. A magnetically mating optical circuit connector (104, 106), comprising.
at least one optical terminal (130, 132);
a connector body (104, 106) configured to engage a corresponding connector (106, 104),
the connector body attached to the at least one optical terminal,
the connector body comprising at least one alignment feature (204) configured to align, when the connector body engages the corresponding connector, each of the at least one optical terminal with a respective corresponding optical terminal of the corresponding connector; and
at least one magnetic attachment area, attached to the connector body,
the at least one magnetic attachment area (122, 124) configured to magnetically attach the connector body to the corresponding connector when the connector body is engaged into the corresponding connector.

2. The magnetically mating optical circuit connector of claim 1, where the at least one magnetic attachment area comprises an electrically conductive path (122, 124),
the electrically conductive path having an electrical connection on the at least one magnetic attachment area, and
the electrically conductive path of the at least one magnetic attachment area configured to conduct electrical power between the electrical connection and an electrical contact of the corresponding connector (126, 128).

3. The magnetically mating optical circuit connector of claim 1, the at least one magnetic attachment area and the connector body configured to urge each of the at least one optical terminal into a conjugate surface of the respective corresponding optical terminal.

4. The magnetically mating optical circuit connector of claim 1, the connector body further comprising:
a moveably attached plug connector protrusion (204); and
a yieldable member within the connector body urging the plug connector protrusion into an extended position, where
the plug connector protrusion is configured to engage a cavity of the corresponding connector (304), and
the at least one optical terminal is attached to the plug connector protrusion.

5. The magnetically mating optical circuit connector of claim 1, the at least one optical terminal comprising a spheroid surface (130), the spheroid surface configured to contact the corresponding optical terminal.

6. The magnetically mating optical circuit connector of claim 1, the connector body having a first end (106), the first end engaging the corresponding connector,
the connector body having a symmetrical configuration on the first end, the at least one magnetic attachment area comprising at least one pair of magnetic attachment areas (122, 124), each pair of magnetic attachment areas within the at least one pair of magnetic attachment areas having a respective first magnetic area (122) and a respective second magnetic area (124), the respective first magnetic area having a first magnetic polarity that is opposite a second magnetic polarity of the respective second magnetic area.
